# EUROPEAN PATENT SPECIFICATION

(11) **EP 3 370 846 B1**
(45) Date of publication and mention of the grant of the patent: **17.05.2023**
(21) Application number: 16800997.5
(22) Date of filing: 02.11.2016
(51) Int. Cl.: B01D 33/23

(54) **FILTER ELEMENT FOR DISC FILTER APPARATUS**
FILTERELEMENT FÜR SCHEIBENFILTERVORRICHTUNG
ÉLÉMENT DE FILTRE POUR APPAREIL DE FILTRE À DISQUES

(30) Priority: 03.11.2015 FI 20155793
(43) Date of publication of application: 12.09.2018
(73) Proprietor: Metso Outotec Finland Oy, 33900 Tampere (FI)
(72) Inventor: HÖGNABBA, Olli, 02460 Kantvik (FI); SIMOLA, Laura, 20810 Turku (FI)
(74) Representative: Papula Oy
(86) International application number: PCT/FI2016/050770
(87) International publication number: WO 2017/077188

(56) References cited:
- WO-A1-2004/024291
- WO-A1-2005/035095
- DE-A1- 4 330 163

## Description

### FIELD OF THE INVENTION

The present invention relates to a filter element of a disc filter apparatus.

Known filter plates are typically heavy, which may make them difficult to handle during maintenance and even cause occupational hazards.

### BACKGROUD

Filtration is a widely used process whereby a slurry or solid liquid mixture is forced through a media, with the solids retained on the media, as a cake, and the liquid phase passing through. This process is generally well understood in the industry. Examples of filtration types include depth filtration, pressure and vacuum filtration, and gravity and centrifugal filtration.

The most commonly used filter media for vacuum filters are filter cloths and coated media, e.g. the ceramic filter medium.

The use of a cloth filter medium requires heavy duty vacuum pumps, due to vacuum losses through the cloth during cake deliquoring. The ceramic filter medium, when wetted, does not allow air to pass through due to a capillary action. This decreases the necessary vacuum level, enables the use of smaller vacuum pumps and, consequently, yields significant energy savings. DE 4330163 discloses a rotary ceramic filter for use in micro- and ultrafiltration. WO 2004024291 discloses a filter plate comprising a substrate and a membrane positioned on the substrate. WO 2005035095 discloses a filter plate with a porous internal layer, a uniform microporous filtering layer on both sides and on the edges of the internal layer. WO 2014191634 discloses a microporous capillary-action filter plate made of recrystallized silicon carbide.

### BRIEF DESCRIPTION

According to the invention, a filter element for a disc filter apparatus according to claim 1 is provided.

Thereby a lighter filter element that is easier and safer to handle during maintenance, for example, may be achieved.

### BRIEF DESCRIPTION OF THE DRAWINGS

Some embodiments illustrating the present disclosure are described in more detail in the attached drawings, in which
Figure 1 illustrates a frame member of a filter element for a disc filter apparatus;
Figure 2a is a side view of a filter element;
Figure 2b is a cutaway view of the filter element shown in Figure 2a;
Figure 3 is a perspective top view illustrating a disc filter apparatus; and
Figure 4 is a side view illustrating the disc filter apparatus shown in Figure 3.

### DETAILED DESCRIPTION

Principles of the embodiments can be applied for drying or dewatering fluid materials in any industrial processes, particularly in mineral and mining industries. In embodiments described herein, a material to be filtered is referred to as slurry, but embodiments are not intended to be restricted to this type of fluid material. The slurry may have high solids concentration, e.g. base metal concentrates, iron ore, chromite, ferrochrome, copper, gold, cobalt, nickel, zinc, lead and pyrite.

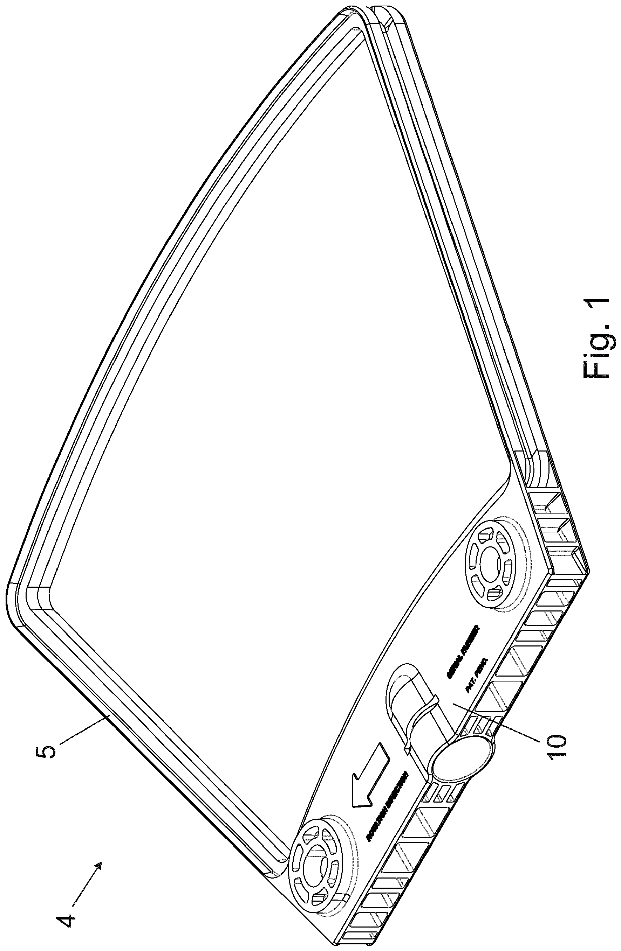

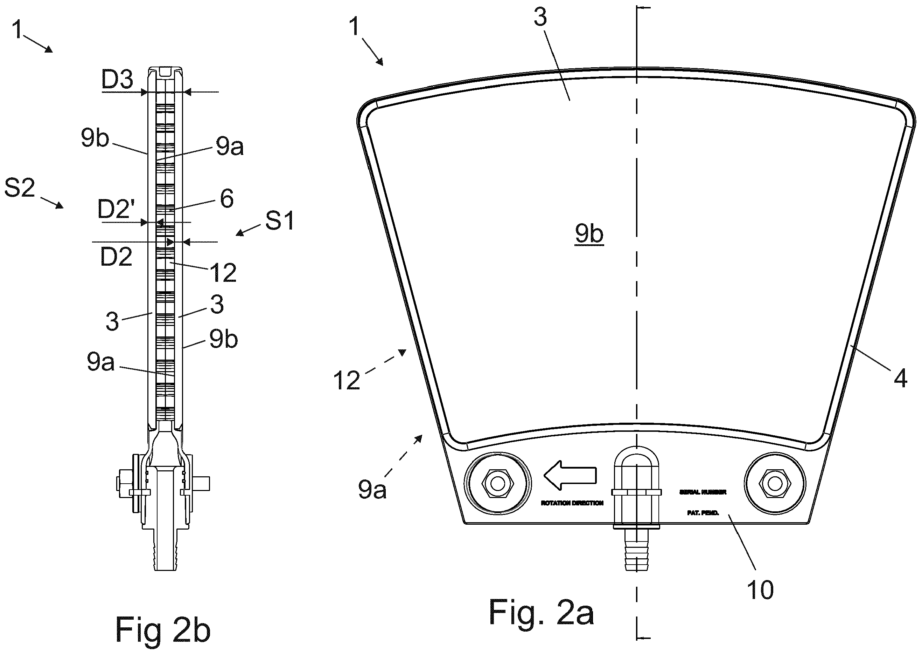

Figure 1 illustrates a frame member 4 of a filter element 1 for a disc filter apparatus 2, Figure 2a is a side view of a filter element, and Figure 2b is a cutaway view of the filter element shown in Figure 2a.

The filter element 1 may comprise at least one filter member 3. The filter element comprises two filter members 3, one on a first side and another on a second side of the filter element 1, wherein the first and the second side of the filter element 1 are opposite to one another. It is to be noted that in Figure 1 only the frame member 4 of the filter element 1 is shown without the filter members 3.

The filter element 1 is a truncated-sector-shaped filter element 1, comprising second or outer filter surfaces 9b on both sides S1, S2 of the element 1. Such a filter element 1 is suitable for a disc filter apparatus.

The filter member 3 comprises a permeable membrane layer and has a first filter surface 9a for receiving a pressure. The pressure may comprise a underpressure during filtering of a feed, whereby the underpressure provides suction on the first filter surface 9a. On the other hand, the pressure may comprise a positive pressure during cleaning and/or maintenance of the filter element 1, such as backwashing. The first filter surface 9a is directed towards an internal cavity 12 arranged inside the filter element 1. According to an embodiment, the internal cavity 12 may be used to collect liquid filtered by the filter element 1 and guide the liquid to further processing. The underpressure during filtering may, thus, be provided inside the internal cavity 12.

The filter member 3 further comprises a second filter surface 9b for receiving solid particles filtered from a feed.

The filter member 3 forms a capillary filter. A capillary filter refers to a filter, wherein the structure and/or the material of the filter, such as the filter member 3, enables a certain amount of liquid, such as water, to be kept in the filter by a capillary action. The liquid may be kept in micro-pores provided in the filter member 3, for example. Such a capillary filter enables the liquid to be filtered to easily flow through the filter member 3, but when all free liquid has passed through the filter member 3, the remaining liquid kept in the filter by the capillary action prevents flow of gas, such as air, through the wet filter member 3. The capillary action thus does not participate in the dewatering itself, for instance by sucking water out of the slurry. In other words, in a capillary filter liquid, usually water, may be kept in the micro-pores of the filter member 3 by capillary forces and no flow of gas takes place after the free water in the residue, such as the cake, has been removed. The filter member 3 formed as a capillary filter prevents air from entering the internal cavity 12.

According to another embodiment, the bubble point of the filter member 3 is at least 0.2 bar. In this context, the bubble point refers to an effective bubble point. The effective bubble point describes a pressure difference between the first filter surface 9a and the second filter surface 9b, at which 1 liter of air flows through one square meter of the second filter surface 9b during a one minute time. In other words, when a 0.2 bar pressure difference is provided, in such a filter member 3, between the outside of the filter element 1 and the inside of the filter element 1, such as within the internal cavity 12, a maximum of 1 liter of air should be able to pass through a square meter of the second filter surface of the filter member 3 during a one minute time. If a flow of air through the filter member 3 at 1 liter per minute requires a pressure difference of 0.2 bar or greater, the bubble point of the filter member 3 is thus at least 0.2 bar. Thereby, in embodiments where it is not practical to block the flow of air completely, only a very minor amount of air may be able to flow through the filter member 3 when the cake is being dried. When the cake is being dried, an underpressure is provided within the filter element 1, such as within the internal cavity 12, which means than the pressure inside the filter element 1 is lower that the pressure outside the filter element 1.

At least 600 liter of water per an hour and per one square meter of the second filter surface 9b may be able to pass through the filter member 3 when a pressure difference of 1 bar is provided between the first filter surface 9a and the second filter surface 9b. Thus, a sufficient amount of water may flow through the filter member 3 to provide efficient filtering of the slurry, especially when the actual filtering takes place. During filtering, an underpressure is provided within the filter element 1, such as within the internal cavity 12, which means that the pressure inside the filter element 1 is lower than the pressure outside the filter element 1.

The pressure difference between the inside of the filter element 1 and the outside of the filter element 1 may be greater during the actual filtering than during the drying of the cake. The drying of the cake may take place for instance in a disc filter apparatus 2 when the filter element 1 in question has passed the filtering position, such as the lowest position in the filter 15 and rotated back upwards. In other words, a specific filter element 1 participates in the actual filtering at a different point of time and at a different position in the filter apparatus 2 than in the drying of the cake. Thus, the relevant pressure difference for the actual filtering and the drying of the cake may be different from one another.

The structure of the filter member 3, such as the mean pore size of the filter member 3, affects both the effective bubble point and the flow of water through the filter member 3.

The thickness D2, D2' of the filter member 3 in the transverse direction of the filter element 1 is smaller than or equal to 24 mm.

The filter element comprises two filter members 3 arranged on each side S1, S2 of the frame member 4 providing two first filter surfaces 9a, one on each side S1, S2 of the frame member 4. Such a filter element 1 may be suitable for a disc filter apparatus and the filtering surface may be doubled. According to such an embodiment, the thickness D2, D2' of the filter member 3 may be smaller than or equal to 12 mm. According to an embodiment, the thickness D2 of the filter member 3 is in the range of 3 mm to 10 mm. According to a further embodiment, the thickness D2 of the filter member 3 is in the range of 5 mm to 10 mm. Thereby, a lighter filter element 1 can be provided, making the filter element 1 easier and safer to handle during maintenance, for example. According to a further embodiment, the widest distance D3 between the second filter surfaces 9b of the filter elements 1 may be in in the range of 10 to 100 mm, preferably in the range of 15 to 50 mm. The ratio between the total distance D3 between the second filter surfaces 9b of the filter element 1 and the thickness D2, D2' of the filter member 1 may be in the range of 3 to 10.

The filter element 1 further comprises a frame member 4 arranged to support the filter members 3 in such a manner that the internal cavity 12 is formed. The frame member 4 is also arranged to connect the filter member 3 to the filter apparatus 2.

The filter member 3 and frame member 4 being provided as separate structural parts, materials of the filter member 3 and the frame member 4 can be selected independently. Thereby, the suitability of the materials for each part of the filter element can be evaluated separately and materials and their properties, such as lightness and degree or permeability, can be selected based on the specific requirements of each part. For instance, a filter element 1 can be provided that is light and at the same time durable to withstand changes in pressure related to vacuum being provided inside the filter element 1 during filtering and positive pressure being provided inside the filter element 1 during cleaning and/or maintenance.

The frame member 4 comprises a material that is less water-absorbent than the material of the filter member 3. This prevents the liquid from being absorbed in the frame member 4 during use. This further lightens the filter element 1 during and after use and makes the filter element 1 easier and safer to handle during maintenance, and helps avoiding acid leaking during maintenance, for example.

According to an embodiment, the frame member 4 may comprise at least one support part 6 for supporting the filter member 3. This enables providing a more durable structure of the filter element also when using filter member(s) 3 with a thickness D2 smaller than or equal to 12 mm. According to a further embodiment, the frame member 4 may comprise a plurality of support parts 6. In such a filter element 1, the durability can be further improved and/or the flow of the filtered liquid inside the cavity 12 can be optimized.

The frame member 4 may comprise a plurality of support parts 6 spaced from other support parts 6, such that the support parts 6 do not transfer forces to one another. In arrangements where the frame member 4 and filter member 3 arranged in contact with one another comprise materials with different thermal expansion coefficients, forces, such as torsional forces, may occur. These forces may be accumulated if continuous contact surfaces with large cross-section are formed, such as when a single support part 6 with a large cross-section in contact with the filter member 3 is provided. These forces may, for instance, compromise the durability of the filter element 1 and if the support parts 6 are arranged to one another in such a manner that these forces may be transferred between them, failure in one of the support parts 6 may accumulate while transferring to other support parts 6. A plurality of support parts 6 spaced from one another can be provided instead to avoid the transfer of forces between the support parts 6. Thus, problems related to thermal expansion can be avoided and the material(s) of the filter member 3 and the frame member 3, such as the material(s) of the support parts 6, can be selected more freely. On the other hand, the material(s) of the filter member 3 and frame member 4 may be selected to avoid or minimize problems related to thermal expansion instead of or in addition to structural means.

According to another embodiment, the frame member 4 may comprise one support part 6 to support the filter member 3. According to one embodiment, such a support part may 6 extend on the outer part of the filter member 3 and support the filter member 3 on the edges of the filter member 3. According to another embodiment, such a support part 6 may be positioned on the middle area of the filter member 3 supporting the filter member 3 substantially at the middle of the filter member 3.

The support part 6 comprises a material that is less water-absorbent than the material of the filter member 3. This prevents the liquid from being absorbed in the frame member 4 during use. All support parts 6 of the filter member 3 comprise a material that is less water-absorbent than the material of the filter member 3.

According to an embodiment, the frame member 4 may comprise at least one support part 6 and the sum of the cross-sectional areas of a filter member ends of the support parts 6 may be in the range of 6 per cent to 60 percent, preferably in the range of 10 per cent to 40 per cent, and more preferably in the range of 15 per cent to 25 per cent, of the sum of the areas of the first filter surfaces 9a of the filter members 3 arranged on the same side of the internal cavity 12 and at the filter member end of the support parts 6.

The structure of the frame member 4 may be formed to prevent transfer of forces, such as torsional forces, between the support parts 6. Thus, problems caused by thermal expansion can be avoided or decreased by structural means instead of or in addition to by the properties of the materials the filter element 1 comprises. This provides an improved and long-lasting solution for avoiding the effect of forces, for example torsional forces, that might compromise the durability of the filter element 1. In addition to thermal expansion, these forces may comprise mechanical forces caused by loads, changes in the negative and/or positive pressures inside and outside the filter element 1 or some other features related to the use of the filter element 1, for example.

Each support part 6 may be connected to at least one other support part 6 by a connector comprising a non-linear shape, such as a curved shape. Such a structure comprising support parts connected to one other is easy to handle during assembly, for example, while the non-linear shape of the connectors effectively decreases the transfer of forces between the support parts 6.

At least one of the support parts 6 may be connected to at least one of the other support parts 6 by a connector that does not transfer forces or at least decreases the transfer of forces between the support parts 6. Such a connector may comprise a connector that is formed as flexible in at least one direction. The flexibility may be provided by selection of the material of the connector and/or by making the connector so thin that it cannot transfer considerable forces between the support parts 6.

In a certain arrangement, the support parts 6 are not connected to one another, but are only in contact with the filter members 3. Such support parts 6 can be formed to be easy to manufacture, for instance by a robot, and modular, such that similar support parts 6 can be used in different kind of filter element configurations. This can save in number and cost of molds, for example. Still, a filter element 1 that is light and durable to stand both positive pressure and underpressure inside the internal cavity 12 during use and maintenance and/or that works well in different temperatures during manufacturing and use can be provided.

The number of support parts 6 on a square meter of first filter surface 9a may be in the range of 50 to 4000 support parts 6. A most suitable number of support parts 6 depend on the arrangement, such as the type of the filter apparatus and the purpose it is used for, and the cross-sectional area of each individual support part 6. For instance, in an arrangement where the support parts 6 comprise a round cross-section, a number of support parts 6 on a square meter of first filter surface 9a may be in the range of 1000 to 4000 support parts 6, preferably in the range of 1500 to 2500 support parts 6. According to an arrangement where the support parts 6 comprise an elongated cross-section, a number of support parts 6 on a square meter of first filter surface 9a may be in the range of 50 to 400 support parts 6, preferably in the range of 100 to 200 support parts 6.

By selection of a suitable number and/or cross-sectional area of the support parts 6 optimal flow of the filtered liquid and sufficient support for the filter member(s) 4 to withstand the pressures during use and maintenance can be enabled.

The frame member 4 comprises a different material or combination of materials than the filter member(s) 3. The frame member 4 may have a thermal expansion coefficient different from that of the filter member 3.

The filter member 3 comprises a ceramic material or a composition comprising a ceramic material. Using a ceramic material or a composition comprising a ceramic material in the filter member(s) 3, very good filtering properties may be achieved. According to an embodiment, the ceramic material may comprise alumina (Al₂O₃), aluminium silicates, silicon carbide and/or titania (TiO₂).

The filter member 3 forms a capillary filter. A capillary filter refers to a filter, wherein the structure and/or the material of the filter, such as the filter member 3, enables a certain amount of liquid, such as water, to be kept in the filter by a capillary action. The liquid may be kept in micro-pores provided in the filter member 3, for example. Such a capillary filter enables the liquid to be filtered to easily flow through the filter member 3, but when all free liquid has passed through the filter member 3, the remaining liquid kept in the filter by the capillary action prevents flow of gas, such as air, through the wet filter member 3. The capillary action thus does not participate in the dewatering itself, for instance by sucking water out of the slurry. In other words, in a capillary filter liquid, usually water, may be kept in the micro-pores of the filter member 3 by capillary forces and no flow of gas takes place after the free water in the residue, such as the cake, has been removed. The filter member 3 formed as a capillary filter prevents air from entering the internal cavity 12.

According to an embodiment, the frame member 4 may comprise a polymer material or a composition comprising a polymer material. This enables making the frame member 4 and, thus, the filter element 1 light and durable, avoiding the frame absorbing water that would increase the weight of the frame member 4 and the filter element 1 in use and/or providing more flexibility in the frame member 4 and, therefore, the filter element 1. The polymer material may comprise a thermoplastic, for example. The thermoplastic may comprise at least one of the following: polyamide (PA), polysulphone (PSU), polyethersulphone (PES), polyphenylene oxide (PPO), polyphenylene sulphide (PPS), acrylo butadiene styrene (ABS), polybutylene terephthalatate (PBT), polycarbonate (PC), and polyolefins, such as polypropylene (PP), polyethylene (PP), e.g. high density polyethylene (HDPE). The thermoplastics may be particularly suitable for molding such frame member 4 structures. The polymer material may comprise a thermoset plastic, for instance an epoxy, a polyurethane or a polyester.

At least the surface of the support parts 6 may comprise the polymer material. A polymer material may be used for instance to provide smooth surfaces minimizing the effect of the support parts 6 on the flow of the filtered liquid.

The frame member may comprise metal.

The edge part 5 of the frame member 4 may comprise a material that differs from the material of the support parts 6.

In other words, parts of the frame member 4 may comprise different materials or combinations of materials. This enables selection of a material most suitable for each structural part of the frame member 4 from part-specific requirement point of view.

The edge part 5 of the frame member 4 may comprise the same material as the material of the support parts 6. This ensures that the parts of the frame member 4 have the same thermal expansion coefficient, which helps avoiding forces being formed between the edge part 5 and the support parts 6.

According to an embodiment, the frame member 4 comprises a material, the water absorbance of which is less than 15 per cent, preferably less than 5 per cent and most preferably less than 2 per cent, of the dry weight of the material. In other words, the frame member 4 may comprise a material capable of absorbing a maximum of 15 g of water per 100 g of dry weight of the material. Preferably, the frame member 4 may comprise a material capable of absorbing a maximum of 5 g of water per 100 g of dry weight of the material. The water absorbance is typically defined by the ability of the material to absorb water in room temperature during a time period of 24 hours.

The filter member 3 is arranged fixedly to the frame member 4. According to an embodiment, the at least one filter member 3 may be glued or melted fixedly to the frame member 4. These methods of fixedly arranging filter member 3 to the frame member 4 can provide a durable bond, be beneficial from manufacturing point of view and/or provide a filter element 1 that is light and durable when vacuum (= underpressure) or pressure (= positive pressure) is provided inside the internal cavity 12. At least one filter member 3 may be arranged fixedly to at least one support part 6 of the frame member 4. This may additionally help avoiding problems related to thermal expansion.

The pore size distribution in the material of the filter member 3 may be equal through the whole thickness of the filter element.

According to an embodiment, the pore size in the material of the filter member 3 increases with the distance from the second filter surface 9b of the filter member 3 towards the first filter surface 9a of the filter member 3, such that the pores with the smallest pore size are faced towards the material to be filtered. This enables a better flow of the liquid through the filter member 3 when compared to a filter member 3 with an equal pore size through the thickness of the filter member 3.

According to an embodiment, the filter member 3 may comprise a multi-layer structure comprising at least a support substrate layer and a filter membrane layer. According to an embodiment, the ratio between the thickness D2, D2' of the filter member 3 and the membrane thickness (not shown) may be in the range of 5 to 15. In other words, a thinner filter membrane layer forming a capillary filter may be arranged on the second filter surface 9b of the filter member 3, for example, and a thicker support substrate layer may be arranged on the first filter surface 9a side of the filter membrane layer to support the filter membrane layer. The ratio between the pore size in the support substrate layer and the filter membrane layer may be in the range of 50 to 150. In other words, the pore size of the filter membrane layer may be smaller enabling forming of the capillary filter and the pore size of the support substrate layer may be in the range of 50 to 150 times the pore size of the filter membrane layer. This enables for instance a better flow of the liquid through the filter member 3 when compared to a filter member 3 formed of a material of the smaller pore size only and for instance more durable bond in embodiments where the filter member 3 is glued to the frame member 4. According to an embodiment, the filter member may comprise at least two filter membrane layers.

According to an embodiment, the frame member 4 comprises at least in the vicinity of the connecting member end 10 of the frame member connecting the filter element 1 to the filter apparatus 2 a portion comprising an identification information for filter element 1 identification purposes, a flow channel for guiding filtered liquid to the filter apparatus 2.

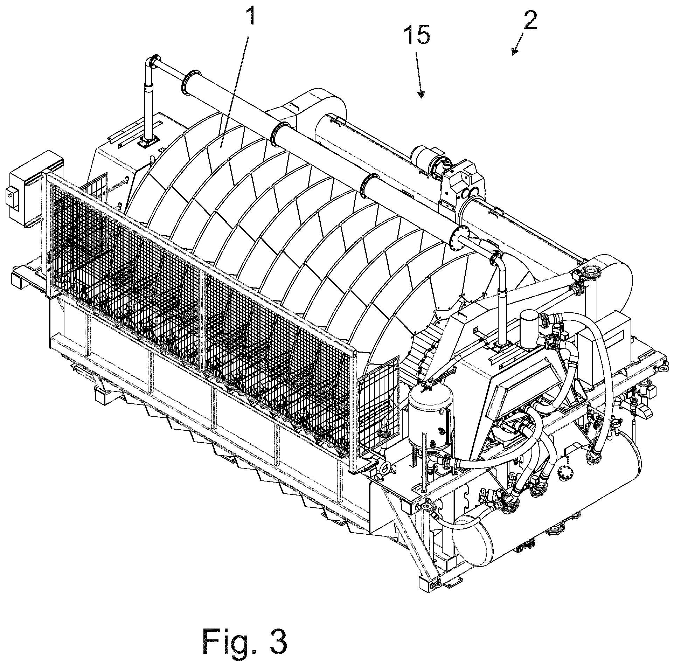

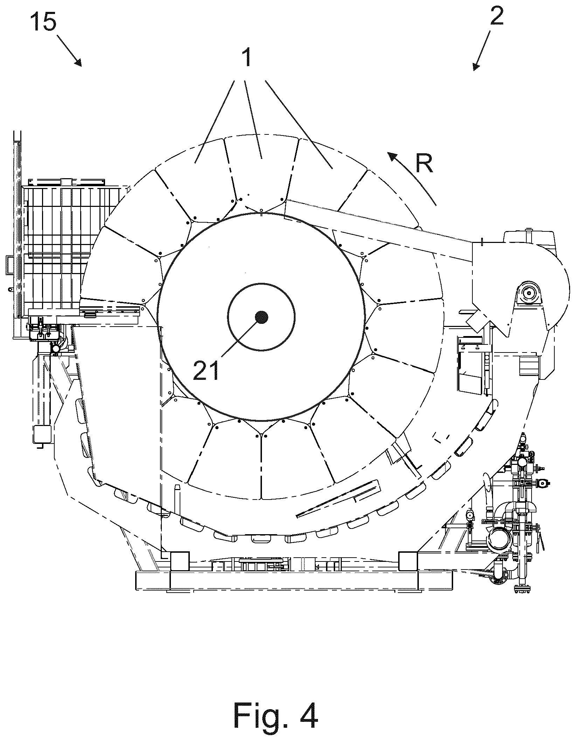

Figure 3 is a perspective top view illustrating a disc filter apparatus, and Figure 4 is a side view illustrating the disc filter apparatus shown in Figure 3.

The disc filter apparatus 2 comprises a filter 15 consisting of several consecutive co-axial filter discs arranged in line co-axially around the central shaft 21 of the filter 15.

The filter 15 is supported by bearings on a frame of the filter apparatus and is rotatable about the longitudinal axis of the central shaft 21 such that the lower portion of the filter 15 is submerged in a slurry basin located below the filter 15. The filter is rotated by e.g. an electric motor.

The number of the filter discs may range from 2 to 20, for example. The filter apparatus shown in Figure 3 comprises twelve (12) filter discs. The outer diameter of the filter 15 may be ranging from 1.5 m to 4 m, for example. Examples of commercially available disc filters include Ceramec CC filters, models CC-6, CC-15, CC-30, CC-45, CC-60, CC-96 and CC-144 manufactured by Outotec Inc.

All the filter discs can be preferably essentially similar in structure. Each filter disc may be formed of a number of individual sector-shaped filter elements 1 discussed earlier in this description. The filter elements 1 are mounted circumferentially in a radial planar plane around the central shaft 21 to form an essentially continuous and planar disc surface. The number of the filter plates in one filter disc may be 12 or 15, for example.

As the central shaft 21 is fitted so as to revolve, each filter element 1 is, in its turn, displaced into a slurry basin and further, as the central shaft 21 revolves, rises out of the basin. As the filter member 3 is submerged in the slurry basin, the cake forms onto the filter member 3 under the influence of the vacuum. Once the filter element 1 comes out of the basin, pores of the filter member 3 are emptied as the cake is deliquored for a predetermined time which is essentially limited by the rotation speed of the disc. The cake can be discharged by e.g. scraping, after which the cycle begins again.

Operation of the disc filter apparatus may be controlled by a filter control unit, such as a Programmable Logic Controller, PLC.

Function of disc filter apparatus is known per se and is therefore not described in more detail.

A filter element 1 according to the current solution may, thus, be provided the weight of which is in the range of 20 to 30 kilograms per a square meter of filtering area. Such a filter element 1 is easier and safer to handle and maintain than typical known filter elements available for disc filter apparatuses.

It will be obvious to a person skilled in the art that, as the technology advances, the inventive concept can be implemented in various ways. The invention and its embodiments are not limited to the examples described above but may vary within the scope of the claims.

## Claims

1. A filter element (1) for a disc filter apparatus (2), the filter element (1) being truncated-sector-shaped and comprising two filter members (3) comprising a ceramic material or a composition comprising a ceramic material, wherein the thickness of each filter member in the transverse direction of the filter element is smaller than or equal to 24 mm,
each of the filter members comprises a permeable membrane layer and has a first filter surface (9a) for receiving a pressure and directed towards an internal cavity (12) arranged inside the filter element, and a second filter surface (9b) for receiving solid particles filtered from a feed, wherein each of the filter members forms a capillary filter, wherein the structure and/or the material of the filter enables a certain amount of liquid to be kept in micro-pores provided in the filter member by a capillary action, **characterized in that**
said filter members are arranged on the opposite sides (S1, S2) of a frame member (4) providing two first filter surfaces (9a), one on each side of the frame member, that
the filter member (3) is arranged fixedly to the frame member (4), that
the frame member (4) comprises an edge part (5) and connecting member end (10) and is arranged to support said filter members in such a manner that the internal cavity is formed, wherein the frame member is arranged to connect the filter member to the disc filter apparatus (2), and that said filter members and the frame member are provided as separate structural parts, and the frame member comprises a material that is less water-absorbent than the material of said filter members.

2. The filter element (1) according to claim 1, wherein the thickness (D2, D2') of the filter member (3) is smaller than or equal to 12 mm.

3. The filter element (1) according to claim 2, wherein the thickness (D2, D2') of the filter member (3) is in the range of 3 mm to 10 mm.

4. The filter element (1) according to claim 3, wherein the thickness (D2, D2') of the filter member (3) is in the range of 5 mm to 10 mm.

5. The filter element (1) according to claim 1, wherein the widest distance between the second filter surfaces (9b) of the filter element is in the range of 10 to 100 mm.

6. The filter element (1) according to any one of the preceding claims, wherein the frame member (4) comprises at least one support part (6) for supporting the filter member (3).

7. The filter element (1) according to claim 6, wherein the frame member (4) comprises a plurality of support parts (6).

8. The filter element (1) according to claim 6 or 7, wherein the support part (6) extends on the outer part of the filter member (3) and support the filter member on the edges of the filter member.

9. The filter element (1) according to any one of claims 6 to 8, wherein the support part (6) is positioned on the middle area of the filter member (3) supporting the filter member substantially at the middle of the filter member.

10. The filter element (1) according to any one of the preceding claims, wherein the at least one filter member (3) is glued or melted fixedly to the frame member (4).

11. The filter element (1) according to any one of the preceding claims, wherein the frame member (4) comprises a polymer material or a composition comprising a polymer material.

12. The filter element (1) according to any one of the preceding claims, wherein the frame member (4) comprises a material, the water absorbance of which is less than 15 per cent of dry weight of the material.

13. The filter element (1) according to any one of the preceding claims, wherein the pore size of the material of the filter member (3) increases with the distance from second filter surface (9b) of the filter member towards the first filter surface (9a) of the filter member, such that the pores with the smallest pore size are faced towards the material to be filtered.

14. The filter element (1) according to any one of the preceding claims, wherein the filter member (3) comprises a multi-layer structure comprising at least a support substrate layer and a filter membrane layer.

15. The filter element (1) according to claim 14, wherein the ratio between the thickness of the filter member (3) and the filter membrane layer thickness is in the range of 5 to 15.

16. The filter element (1) according to claim 14 or 15, wherein the filter member (3) comprises at least two filter membrane layers.

17. The filter element (1) according to any one of the preceding claims, wherein the bubble point of the filter member (3) is at least 0.2 bar.

18. The filter element (1) according to any one of the preceding claims, wherein the frame member (4) comprises at least in the vicinity of the connecting member end of the frame member connecting the filter element (1) to the filter apparatus (2) a portion comprising an identification information for filter element identification purposes, a flow channel for guiding filtered liquid to the filter apparatus.

## Patentansprüche

1. Filterelement (1) für eine Scheibenfiltervorrichtung (2), wobei das Filterelement (1) kegelstumpfsektorförmig ist und zwei Filterelemente (3) aufweisend ein keramisches Material oder eine ein keramisches Material aufweisende Zusammensetzung aufweist, wobei die Dicke jedes Filterelements in der Querrichtung des Filterelements kleiner oder gleich 24 mm ist,
jedes der Filterelemente eine permeable Membranschicht aufweist und eine erste Filterfläche (9a) zur Aufnahme eines Drucks hat und auf einen im Inneren des Filterelements angeordneten inneren Hohlraum (12) gerichtet ist, und eine zweite Filterfläche (9b) zur Aufnahme von aus einer Zufuhr gefilterten Feststoffpartikeln, wobei jedes der Filterelemente einen Kapillarfilter bildet, wobei die Struktur und/oder das Material des Filters ermöglicht, eine bestimmte Flüssigkeitsmenge durch eine Kapillarwirkung in den im Filterelement vorgesehenen Mikroporen zu halten, **dadurch gekennzeichnet, dass**
die Filterelemente an den gegenüberliegenden Seiten (S1, S2) eines Rahmenelements (4) angeordnet sind, die zwei erste Filteroberflächen (9a) bereitstellen, eine auf jeder Seite des Rahmenelements, dass
das Filterelement (3) fest an dem Rahmenelement (4) angeordnet ist, dass
das Rahmenelement (4) ein Randteil (5) und Verbindungselementende (10) aufweist und angeordnet ist, die Filterelemente in einer solchen Weise zu stützen, dass der innere Hohlraum gebildet ist, wobei das Rahmenelement angeordnet ist, das Filterelement mit der Scheibenfiltervorrichtung (2) zu verbinden, und dass die Filterelemente und das Rahmenelement als separate Strukturteile vorgesehen sind, und das Rahmenelement ein Material aufweist, das weniger wasserabsorbierend ist als das Material der Filterelemente.

2. Filterelement (1) nach Anspruch 1, wobei die Dicke (D2, D2') des Filterelements (3) kleiner als oder gleich 12 mm ist.

3. Filterelement (1) nach Anspruch 2, wobei die Dicke (D2, D2') des Filterelements (3) im Bereich von 3 mm bis 10 mm liegt.

4. Filterelement (1) nach Anspruch 3, wobei die Dicke (D2, D2') des Filterelements (3) im Bereich von 5 mm bis 10 mm liegt.

5. Filterelement (1) nach Anspruch 1, wobei der weiteste Abstand zwischen den zweiten Filterflächen (9b) des Filterelements im Bereich von 10 bis 100 mm liegt.

6. Filterelement (1) nach einem der vorhergehenden Ansprüche, wobei das Rahmenelement (4) mindestens ein Stützteil (6) zum Stützen des Filterelements (3) aufweist.

7. Filterelement (1) nach Anspruch 6, wobei das Rahmenelement (4) eine Vielzahl von Stützteilen (6) aufweist.

8. Filterelement (1) nach Anspruch 6 oder 7, wobei sich das Stützteil (6) auf dem äußeren Teil des Filterelements (3) erstreckt und das Filterelement an den Rändern des Filterelements stützt.

9. Filterelement (1) nach einem der Ansprüche 6 bis 8, wobei das Stützteil (6) im mittleren Bereich des Filterelements (3) positioniert ist und das Filterelement im Wesentlichen in der Mitte des Filterelements stützt.

10. Filterelement (1) nach einem der vorhergehenden Ansprüche, wobei das mindestens eine Filterelement (3) fest mit dem Rahmenelement (4) verklebt oder verschmolzen ist.

11. Filterelement (1) nach einem der vorhergehenden Ansprüche, wobei das Rahmenelement (4) ein Polymermaterial oder eine ein Polymermaterial aufweisende Zusammensetzung aufweist.

12. Filterelement (1) nach einem der vorhergehenden Ansprüche, wobei das Rahmenelement (4) ein Material aufweist, dessen Wasserabsorptionsfähigkeit weniger als 15 Prozent des Trockengewichts des Materials beträgt.

13. Filterelement (1) nach einem der vorhergehenden Ansprüche, wobei die Porengröße des Materials des Filterelements (3) mit dem Abstand von der zweiten Filterfläche (9b) des Filterelements zur ersten Filterfläche (9a) des Filterelements zunimmt, so dass die Poren mit der kleinsten Porengröße dem zu filternden Material zugewandt sind.

14. Filterelement (1) nach einem der vorhergehenden Ansprüche, wobei das Filterelement (3) eine mehrschichtige Struktur aufweist, die mindestens eine Trägersubstratschicht und eine Filtermembranschicht aufweist.

15. Filterelement (1) nach Anspruch 14, wobei das Verhältnis zwischen der Dicke des Filterelements (3) und der Filtermembranschichtdicke im Bereich von 5 bis 15 liegt.

16. Filterelement (1) nach Anspruch 14 oder 15, wobei das Filterelement (3) mindestens zwei Filtermembranschichten aufweist.

17. Filterelement (1) nach einem der vorhergehenden Ansprüche, wobei der Blasenpunkt des Filterelements (3) mindestens 0,2 bar beträgt.

18. Filterelement (1) nach einem der vorhergehenden Ansprüche, wobei das Rahmenelement (4) zumindest in der Nähe des Verbindungselementendes des Rahmenelements, welches das Filterelement (1) mit der Filtervorrichtung (2) verbindet, einen Abschnitt, aufweisend eine Identifikationsinformation zu Filterelementidentifikationszwecken, einen Strömungskanal zum Führen gefilterter Flüssigkeit zur Filtervorrichtung aufweist.

## Revendications

1. Élément filtrant (1) pour un appareil de filtre à disque (2), l'élément filtrant (1) étant en forme de secteur tronqué et comprenant deux éléments filtrants (3) comprenant un matériau céramique ou une composition comprenant un matériau céramique, dans lequel l'épaisseur de chaque élément filtrant dans la direction transversale de l'élément de filtre est inférieure ou égale à 24 mm,
chacun des éléments filtrants comprend une couche de membrane perméable et présente une première surface de filtre (9a) destinée à recevoir une pression et dirigée vers une cavité interne (12) disposée à l'intérieur de l'élément filtrant, et une seconde surface de filtre (9b) destinée à recevoir des particules solides filtrées à partir d'une alimentation, dans lequel chacun des éléments filtrants forme un filtre capillaire, dans lequel la structure et/ou le matériau du filtre permet à une certaine quantité de liquide d'être maintenue dans des micro-pores prévus dans l'élément filtrant par une action capillaire, **caractérisé en ce que**
lesdits éléments filtrants sont disposés sur les côtés opposés (S1, S2) d'un élément de cadre (4) fournissant deux premières surfaces de filtre (9a), une sur chaque côté de l'élément de cadre, **en ce que**
l'élément filtrant (3) est disposé de manière fixe sur l'élément de cadre (4), **en ce que**
l'élément de cadre (4) comprend une partie de bord (5) et une extrémité d'élément de connexion (10) et est agencé pour supporter lesdits éléments de filtre d'une manière à former la cavité interne, dans lequel l'élément de cadre est agencé pour connecter l'élément de filtre au dispositif de filtre à disque (2), et **en ce que** lesdits éléments de filtre et l'élément de cadre sont prévus comme des parties structurelles séparées, et l'élément de cadre comprend un matériau qui est moins hydro-absorbant que le matériau desdits éléments de filtre.

2. Élément filtrant (1) selon la revendication 1, dans lequel l'épaisseur (D2, D2') de l'élément filtrant (3) est inférieure ou égale à 12 mm.

3. Élément filtrant (1) selon la revendication 2, dans lequel l'épaisseur (D2, D2') de l'élément filtrant (3) est comprise dans la plage de 3 mm à 10 mm.

4. Élément filtrant (1) selon la revendication 3, dans lequel l'épaisseur (D2, D2') de l'élément filtrant (3) est comprise dans la plage de 5 mm à 10 mm.

5. Élément filtrant (1) selon la revendication 1, dans lequel la distance la plus large entre les secondes surfaces filtrantes (9b) de l'élément filtrant est comprise entre 10 et 100 mm.

6. Élément filtrant (1) selon l'une quelconque des revendications précédentes, dans lequel l'élément de cadre (4) comprend au moins une partie de support (6) pour supporter l'élément filtrant (3).

7. Élément filtrant (1) selon la revendication 6, dans lequel l'élément de cadre (4) comprend une pluralité de pièces de support (6).

8. Élément filtrant (1) selon la revendication 6 ou 7, dans lequel la partie de support (6) s'étend sur la partie extérieure de l'élément filtrant (3) et supporte l'élément filtrant sur les bords de l'élément filtrant.

9. Élément filtrant (1) selon l'une quelconque des revendications 6 à 8, dans lequel la partie de support (6) est positionnée sur la zone médiane de l'élément filtrant (3) supportant l'élément filtrant sensiblement au milieu de l'élément filtrant.

10. Élément filtrant (1) selon l'une quelconque des revendications précédentes, dans lequel le au moins un élément filtrant (3) est collé ou fondu de manière fixe sur l'élément de cadre (4).

11. Élément filtrant (1) selon l'une quelconque des revendications précédentes, dans lequel l'élément de cadre (4) comprend un matériau polymère ou une composition comprenant un matériau polymère.

12. Élément filtrant (1) selon l'une quelconque des revendications précédentes, dans lequel l'élément de cadre (4) comprend un matériau dont l'absorption d'eau est inférieure à 15 % du poids sec du matériau.

13. Élément filtrant (1) selon l'une quelconque des revendications précédentes, dans lequel la taille des pores du matériau de l'élément filtrant (3) augmente avec la distance entre la deuxième surface filtrante (9b) de l'élément filtrant et la première surface filtrante (9a) de l'élément filtrant, de sorte que les pores ayant la plus petite taille de pores sont orientés vers le matériau à filtrer.

14. Élément filtrant (1) selon l'une quelconque des revendications précédentes, dans lequel l'élément filtrant (3) comprend une structure multicouche comprenant au moins une couche de substrat de support et une couche de membrane filtrante.

15. Élément filtrant (1) selon la revendication 14, dans lequel le rapport entre l'épaisseur de l'élément filtrant (3) et l'épaisseur de la couche de membrane filtrante est compris entre 5 et 15.

16. Élément filtrant (1) selon la revendication 14 ou 15, dans lequel l'élément filtrant (3) comprend au moins deux couches de membranes filtrantes.

17. Élément filtrant (1) selon l'une quelconque des revendications précédentes, dans lequel le point de bulle de l'élément filtrant (3) est d'au moins 0,2 bar.

18. Élément filtrant (1) selon l'une quelconque des revendications précédentes, dans lequel l'élément de cadre (4) comprend, au moins à proximité de l'extrémité de l'élément de raccordement de l'élément de cadre reliant l'élément filtrant (1) à l'appareil de filtration (2), une partie comprenant une information d'identification à des fins d'identification de l'élément filtrant, un canal d'écoulement pour guider le liquide filtré vers l'appareil de filtration.
